# EUROPEAN PATENT APPLICATION

(11) **EP 1 133 161 A2**
(43) Date of publication of application: **12.09.2001**
(21) Application number: 01301320.6
(22) Date of filing: 15.02.2001
(51) Int. Cl.: H04N 1/40

(54) **Image forming apparatus**

(30) Priority: 07.03.2000 JP 2000062171
(71) Applicant: ALPS ELECTRIC CO., LTD., Ota-ku Tokyo 145 (JP)
(72) Inventor: Matsuda, Shoji, C/o Alps Electric Co., Ltd., Ota-ku, Tokyo 145 (JP)
(74) Representative: Kensett, John Hinton

(57) **Abstract**

Disclosed is an image forming apparatus which makes it possible to achieve an increase in printing speed and a reduction in power consumption in an image forming apparatus using multi-value printing data. The image forming apparatus has an analysis device (CPU 1) for analyzing multi-value printing data and detecting the density distribution, and a switching device (CPU 1) for switching between a multi-value printing mode in which multi-value printing is performed and a black-and-white printing mode in which printing is performed by reducing the number of levels of gray as compared with the multi-value printing mode, wherein the analysis device analyzes multi-value data, and wherein it is determined that the apparatus is in the blackand-white mode when the density distribution is such that there are only low density and high density, printing being performed after switching from the multi-value printing mode to the black-and-white printing mode by the switching means.

## Description

### BACKGROUND OF THE INVENTION

### 1. Field of the Invention

The present invention relates to an image forming apparatus for effecting multi-value print output on the basis of printing data in the form of multi-value data.

### 2. Description of the Related Art

Conventionally, there is a method for printing multi-tone data (density data) using, for example, a thermal head, as the printing means, wherein the time that electricity is supplied to the head is controlled according to the density value corresponding to each tone.

In this case, in correspondence with the sensitivity of the heat-sensitive paper, it is necessary to effect a subtle matching of the sensitivity of the heat-sensitive paper and the head energizing time, so that the control of the energizing time is difficult to perform. Further, when expression is effected using a matrix method such as a dither method, one density expression pixel depends on the dither matrix. For example, in the case of a 4 x 4 (16 levels of gray) dither, even if a 400 dpi head is used, the resolution is reduced to 1/4, which corresponds to 100 dpi (dot per inch).

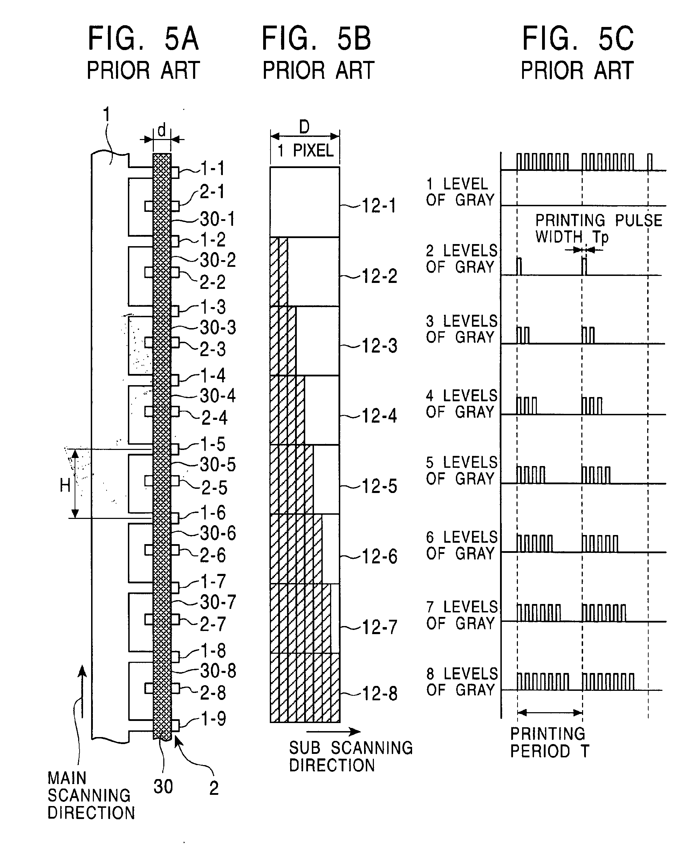

Here, a halftone recording method in a conventional thermal head will be described with reference to Fig. 5.

Fig. 5 is a diagram illustrating a halftone recording method in a conventional thermal head, of which Fig. 5A is a schematic diagram showing the construction of a thermal head, Fig. 5B is an explanatory diagram showing a printing dot expressing tone, and Fig. 5C is a diagram illustrating printing timing.

In these drawings, numeral 1 indicates a comb-like common electrode, numeral 2 indicates a comb-like selection electrode, numeral 30 indicates a heat generating resistor, numerals 1-1 through 1-9 indicate comb-like common electrode elements extending in sub-scanning direction from the comb-like common electrode 1, numerals 2-1 through 2-9 indicate c comb-like selection electrode elements, numerals 30-1 through 30-8 indicate unit heat generation regions, and numerals 12-1 through 12-8 indicate printing recording.

The basic electrode construction of this thermal head is an alternate lead type, and the printing recording is performed in a unit heat generation region H between one comb-like selection electrode element (e.g., 2-5) and the comb-like common electrode elements on both sides thereof (e.g., 1-5 and 1-6). The width d in the sub scanning direction of the heat generation resistor 30 is set to be smaller than the width D in the sub scanning direction of one pixel. In this conventional example, the width d in the sub scanning direction of the heat generation resistor 30 is approximately 1/4 of the width D in the sub scanning direction of one pixel to perform halftone recording in 8 levels of gray.

The recording paper, which is the recording medium, is fed in the sub scanning direction at low speed. The feeding speed for this recording paper is such that the paper is fed at the printing period T shown in (c) by the width D in the sub scanning direction of one pixel. As shown in the printing recording 12-1, the first level of gray is expressed through non-printing, no printing pulse being applied.

As shown in the printing recording 12-2, the second level of gray is expressed by applying a printing pulse of a pulse width Tp such as records a dot of substantially the same area as the unit heat generation region of the heat generation resistor, whereby 1/4 (2/8) of one pixel is recorded. The third level of gray is expressed by performing printing recording through application of a printing pulse of a pulse width of Tp again to the heat generation resistor of the unit heat generation region 30-3 at a timing delayed by 1/8 of the printing period T after first performing the same recording as the second level of gray (the recording paper is fed by 1/8 of the width in the sub scanning direction of one pixel), whereby 3/8 of one pixel is recorded.

Further, the fourth level of gray is expressed by performing printing recording through application of a printing pulse of a pulse width of Tp again to the heat generation resistor of the unit heat generation region 30-4 at a timing delayed by 1/8 of the printing period T after performing the same recording as the third level of gray (the recording paper is fed by 1/8 of the width in the sub scanning direction of one pixel), whereby 1/2 (4/8) of one pixel is recorded.

From this on, the number of printing pulses sequentially applied is increased by a similar operation, whereby it is possible to perform halftone recording of 8 levels of gray, as shown in Fig. 5. While this conventional example has been described referring to the case of 8 levels of gray for sake of simplicity, it is possible in reality to perform halftone recording of 64 levels of gray at a period of 20 ms/line using a thermal head of a resolution of 300 dpi, the width d thereof in the sub scanning direction being approximately 20 µm, and using a high resolution ink donor film (PET bas material thickness: 3.5 µm, ink application amount: 2.0 g/m²).

However, in the above conventional technique, in which multi-value printing output is performed on the basis of multi-value printing data, the multi-value (gray-scale) printing takes a lot of time, and there is a demand for an improvement in terms of printing speed without deteriorating the printing quality.

### SUMMARY OF THE INVENTION

Accordingly, it is an object of the present invention to provide an image forming apparatus in which it is possible to increase the printing speed and reduce the power consumption in an image forming apparatus based on multi-value printing data.

To achieve the above object, there is provided, in accordance with the present invention, an image forming apparatus which performs multi-value printing output based on multi-value printing data, the apparatus comprising analysis means for analyzing the multi-value printing data to detect density distribution, and switching means for switching between a multi-value printing mode in which multi-value printing is performed and a black-and-white printing mode in which printing is performed with the number of levels of gray reduced as compared with the multi-value printing mode, wherein the analysis means, which analyzes the multi-value data, determines that the apparatus is in the black-and-white mode when the density distribution is such that there are only low density and high density, printing being performed after switching from the multivalue printing mode to the black-and-white printing mode by the switching means. Due to this construction, printing can be performed at high speed and in a clear form, making it possible to perform printing with low power consumption.

Preferably, when switching is effected from the multi-value printing mode to the black-and-white printing mode, with the division number corresponding to the multi-value printing being reduced to 1/n (n is a positive integer), the time that the printing head is energized in the black-and-white mode is more than zero and less than n times the energizing time before the division number is reduced to 1/n. Due to this arrangement, high-speed printing is possible by reducing the division number, and a further reduction in power consumption in printing is possible.
Fig. 1 is a block diagram of an image forming apparatus according to an embodiment of the present invention;
Fig. 2 is a flowchart illustrating the mode switching operation in an image forming apparatus according to an embodiment of the present invention;
Figs. 3A through 3C are explanatory diagrams showing output data of each level of gray of one dot;
Fig. 4 is a timing chart showing the relationship between head energizing and head temperature; and
Fig. 5 is an explanatory diagram showing the halftone recording method in a conventional thermal head.

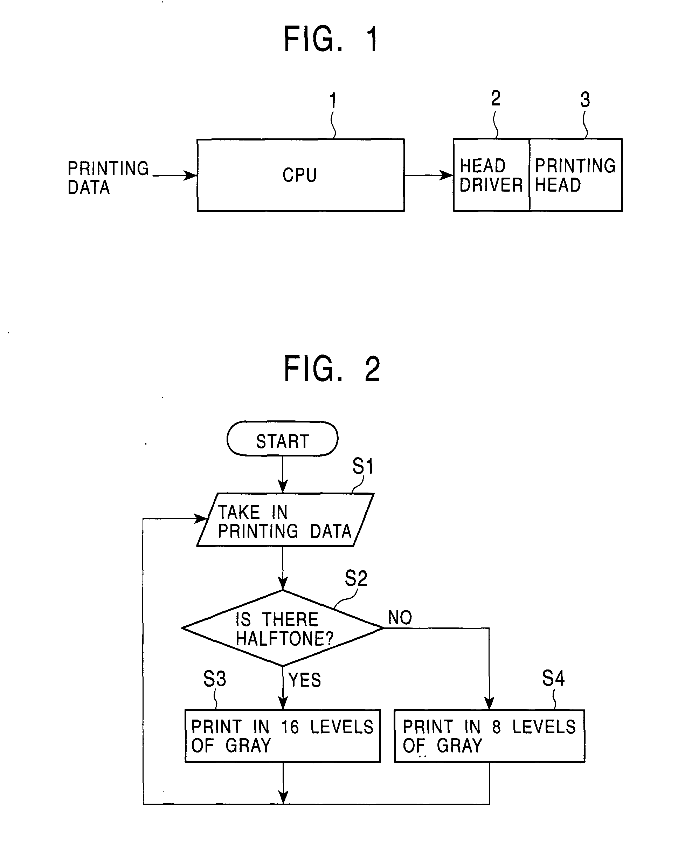

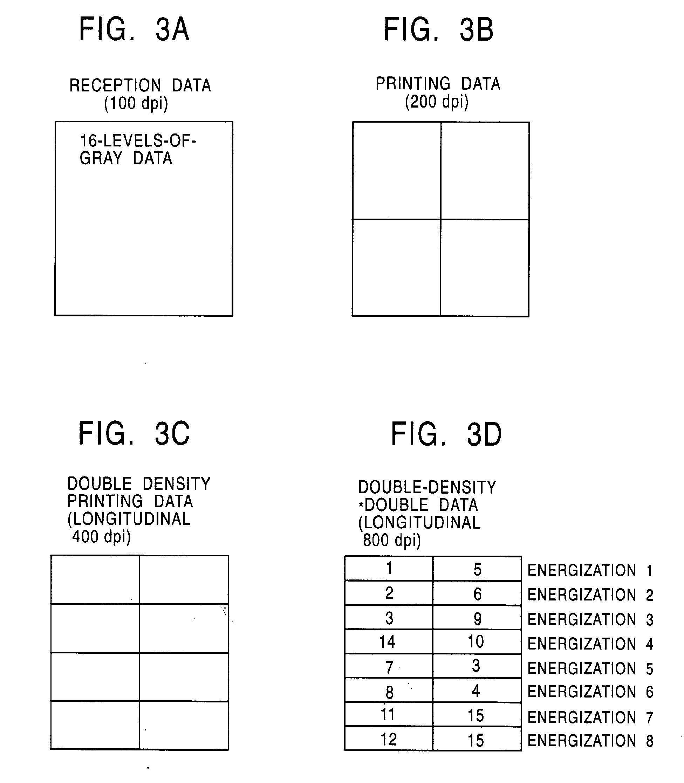

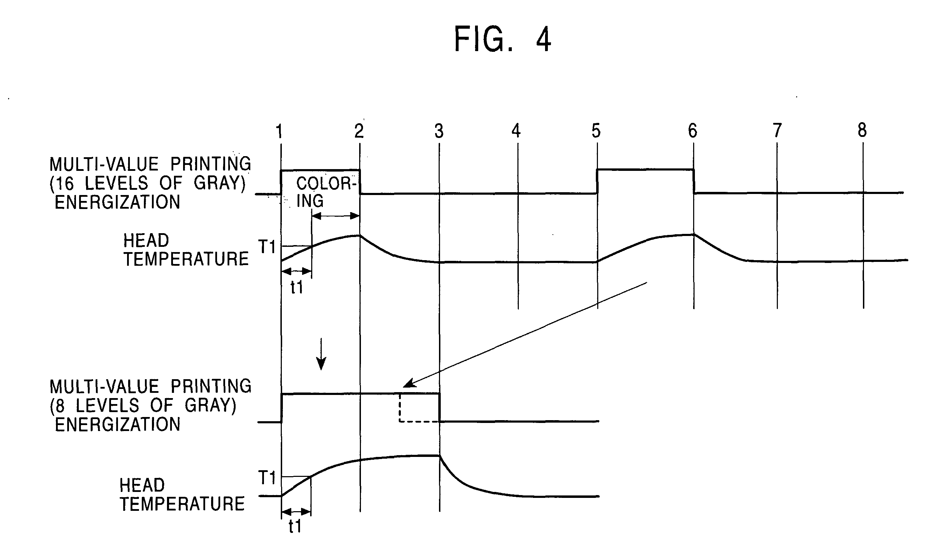

First, an embodiment of the present invention will be described with reference to Figs. 1 through 5. Fig. 1 is a block diagram of an image forming apparatus according to an embodiment of the present invention; Fig. 2 is a flowchart illustrating the mode switching operation in an image forming apparatus according to an embodiment of the present invention; Figs. 3A through 3C are explanatory diagrams showing output data of each level of gray of one dot; and Fig. 4 is a timing chart showing the relationship between head energizing and head temperature.

First, a gray scale printing method in a thermal printer will be described.

In this gray scale printing method, in a thermal printer in which gray scale data is the input value, printing data is divided according to the number of input levels of gray, and energizing/non-energizing which gives a density corresponding to the input number of levels of gray is determined, achieving a printing density corresponding to the input gray scale.

For example, when the input gray scale is 16, the printing head of this embodiment is 200 dpi for the reception data shown in Fig. 3A (100 dpi), so that one dot of reception data corresponds to four printing dots. That is, in the case of 200 dpi, when printing is performed with a printing head 2 x 2 = 4 dots = 100 dpi, the in 1 dot can be output in four levels of gray (See Fig. 3B). Further, by performing double density energizing, it is possible to divide 200 dpi to make four blocks in the sub scanning direction, expressing the in 1 dot in 8 levels of gray (See Fig. 3C). Further, as shown in Fig. 3D, by dividing the double density dot in two and effecting 2 density expression, it is possible to express the in 1 dot in 16 levels of gray (16 + 1 = 17 levels of gray).

To realize this, it is necessary to refer to a dither matrix table to determine whether to turn on or off the energizing (for the dither matrix, an in-double-density-data value shown in Fig. 3D is selected, and energizing is effected at a value higher than this).

In this way to express 100 dpi and 16 level of gray by a dither method, it is conventionally necessary to use a 400 dpi printing head. In the above-described method, however, the expression is possible with a 200 dpi printing head.

Regarding the feeding in the sub scanning direction, in the case of fixed speed feeding, it is possible by starting energizing with a fixed timing or performing sub scanning feeding on the basis of energizing timing.

By dividing the printing data as described above, the memory amount used for printing increases. However, gray scale expression becomes possible.

Next, the features of the present invention will be described.

In Fig. 1, numeral 1 indicates a CPU, numeral 2 indicates a head driver, and numeral 3 indicates a printing head.

The CPU 1 is provided with a printing data taking-in function, a printing data analyzing function (analysis means), and a printing data output function. These constitute the switching means. By this CPU 1, mode switching is effected in correspondence with the printing data. For example, when the input density value is 16 levels of gray, when there is no input value in an intermediate density range, which ranges, for example, from 3 to 12, it is determined that the apparatus is in the black-and-white printing mode.

The printing data taking-in function serves to take in an input value of 16 levels of gray. When the input value ranges from 3 to 11, the printing data analyzing function determines that the value is a halftone value (intermediate data), and the printing data output function outputs the printing data to the head driver 2 in 16 or 8 levels of gray printing mode, and performs printing by the printing head 3.

And, when there is a halftone value, printing data is output from the printing data output function in 16 levels of gray printing mode by the switching means.

And, on the basis of the multi-value printing data, 100 dpi printing data is printed by a 200 dpi head in 16 division dither (16 levels of gray printing). As described above, when there is no halftone value in the multi-value printing data, the apparatus is set in the binary mode (black-and-white mode) and 8 division dither printing is performed with a 200 dpi head; with printing data having no halftone value, the number of level of gray is reduced, and printing is performed at high speed and with small power consumption.

Next, the mode switching control operation will be described with reference to the flowchart of Fig. 2.

As shown in Fig. 3A, the printing data taken in is a 16 levels of gray data (S1). Thus, the input value ranges from 0 to 15. Of the input values of 0 to 15, for example, 3 to 11 are referred to as halftone values (intermediate data).

And, the printing data analyzing function of the CPU 1 makes a judgment as to whether there is halftone data or not (S2). When there is halftone data (i.e., in the case of "yes" in S2), printing data is output to the head driver 2 in the 16 levels of gray printing mode by the printing data output function, and 16-levels-of-gray printing is conducted by the printing head 3. On the other hand, when there is no halftone data (i.e., in the case of "no" in S2), the printing data is output to the head driver 2 in the 8 levels of gray mode by the printing data output function, and 8-levels-of-gray printing is conducted by the printing head 3. These operations are repeated until the taking in of the printing data is completed.

When there is no halftone data in the printing data thus taken in, printing is performed with the number of levels of gray reduced as from 16 to 8. That is, the printing division number is reduced.

In this multi-value mode printing in which 16-levels-of-gray printing is performed, density (16 levels of gray) printing is conducted through multi-division in the sub scanning direction as described above. In the black-and-white mode printing in which 8-levels-of-gray printing is performed, the division number in the sub scanning direction is reduced, and 8-levels-of-gray printing is performed, so that clear printing can be effected at high speed.

Next, the effect of reducing the division number will be described with reference to Fig. 4.

In this example, the number of level of gray is reduced by half, from 16 to 8. When in Fig. 4 the section from 1 to 2 is energized in multi-value printing (16 levels of gray), the head temperature is gradually raised until it reaches the temperature T1 at which the thermo-sensitive paper colors, the temperature further rising during the energizing. When the energizing is stopped, the head temperature is lowered, and the thermo-sensitive paper ceases to color. When the section from 5 to 6 is energized, the head temperature is gradually raised until it reaches the temperature T1 at which the thermo-sensitive paper colors, the temperature further rising during the energizing. As described above, no coloring occurs during the period t1 from the energizing start to the moment at which the temperature T1 is reached, which means it is a loss time, so that the interval in energizing must be set taking this into account, resulting in a waste in time.

By reducing the division number as in this embodiment, that is, by making the sections 1-2 and 5-6 shown in Fig. 4 one, it is possible to lengthen the energizing time for one dot. Thus, when the section from 1 to 3 is energized in multi-value printing (8 levels of gray), the head temperature is gradually raised until it reaches the temperature T1 to cause the thermo-sensitive paper to color. However, there is only one loss time, t1, which means the loss time is less by the t1.

Further, no problem is involved in gray scale printing if the long energizing period (the section 1-3) is turned off before the section 3 is reached, and the energizing time is made more than zero and less than 2 (n) times the energizing time (the section 1-2) before the division number of the energizing time is reduced to 1/2 (1/n), whereby, by reducing the division number, high-speed printing is possible, and printing is possible with still lower power consumption.

The reduction of the division number (i.e., the reduction of the number of levels of gray) is not restricted to the reduction to 1/2. It is also possible to reduce it to 1/n, making it less than n times the energizing time before the reduction.

Further, the present invention is not restricted to the above-described embodiment. It is also applicable to an image forming apparatus such as a printer performing gray scale printing through division.

As described above, in accordance with the present invention, the printing mode is switched according to the printing data, whereby the printing data with no halftone is printed with the division number reduced, so that it is possible to obtain clear printing by high-speed printing, and printing is possible with low power consumption.

Further, by reducing the division number, it is possible to lengthen the one dot energizing time.

Further, printing is possible perform printing by making this long energizing time more than zero and less than n times the reduction of the division number to l/n, so that high-speed printing is possible through reduction of the division number, and printing is possible with still lower power consumption.

## Claims

1. An image forming apparatus which performs multi-value printing output based on multi-value printing data,
the apparatus comprising analysis means for analyzing the multi-value printing data to detect density distribution, and
switching means for switching between a multi-value printing mode in which multi-value printing is performed and a black-and-white printing mode in which printing is performed with the number of levels of gray reduced as compared with the multi-value printing mode,
wherein the analysis means, which analyzes the multi-value data, determines that the apparatus is in the black-and-white mode when the density distribution is such that there are only low density and high density, printing being performed after switching from the multi-value printing mode to the black-and-white printing mode by the switching means. Due to this construction, printing can be performed at high speed and in a clear form, making it possible to perform printing with low power consumption.

2. An image forming apparatus according to Claim 1, wherein, when switching is effected from the multi-value printing mode to the black-and-white printing mode, with the division number corresponding to the multi-value printing being reduced to 1/n (n is a positive integer), the time that the printing head is energized in the black-and-white mode is more than zero and less than n times the energizing time before the division number is reduced to 1/n.
